# EUROPEAN PATENT APPLICATION

(11) **EP 4 624 245 A1**
(43) Date of publication of application: **01.10.2025**
(21) Application number: 24755171.6
(22) Date of filing: 02.08.2024
(51) Int. Cl.: B60N 2/26, B60N 2/32, B60N 2/90

(54) **ADULT/CHILD INTEGRATED SEAT**

(30) Priority: 06.02.2024 CN 202410169743
(71) Applicant: Zhejiang Yahu Auto Parts Co., Ltd., Wenzhou, Zhejiang 325200 (CN)
(72) Inventor: CHI, Ruiwei, Wenzhou, Zhejiang 325200 (CN); LI, Rui, Wenzhou, Zhejiang 325200 (CN); SUN, Zhongtao, Wenzhou, Zhejiang 325200 (CN); CAI, Wanwei, Wenzhou, Zhejiang 325200 (CN); CHEN, Yongle, Wenzhou, Zhejiang 325200 (CN)
(74) Representative: Longoni, Alessandra
(86) International application number: PCT/CN2024/109344
(87) International publication number: WO 2025/167016

(57) **Abstract**

The invention discloses an integrated seat for adults and children, relating to the field of car seats. According to a technical solution of the invention, the integrated seat for adults and children includes a body portion and a child portion. A surface of the body portion is provided with a fixing groove for accommodating the child portion. The child portion is embedded in the fixing groove. The child portion includes a child main body and side wings swingable forward arranged on two sides of the child main body respectively. The integrated seat for adults and children can switch between an adult seat and a child seat and can effectively protect a child from two sides after switching to the child seat. The integrated seat for adults and children has a higher space utilization rate and is suitable for both adults and children.

## Description

### FIELD OF TECHNOLOGY

The invention relates to the field of car seats, and in particular to an integrated seat for adults and children.

### BACKGROUND

A child seat is a special seat for children in a car. Different from an adult seat, the child seat is usually provided with protective structures for two sides of the head, waist and hips of a child to protect against impact from the sides. The existing child seat is usually additionally installed on an adult seat of a conventional car. According to this solution, a large space is occupied; and moreover, after the child seat is installed, this seat is only available for children and no longer available for adults, which is not convenient for regular use of the car. Patent Publication No. CN204845612U discloses an integrated safety seat for adults and children. According to this solution, the adult seat is rotated such that the backrest for children is moved forward. However, this solution has great potential safety hazards in actual use because it is impossible to protect the child from the sides.

### SUMMARY

In order to solve the above technical problems, the invention provides an integrated seat for adults and children, which can switch between an adult seat and a child seat and can effectively protect the child from two sides after switching to the child seat. The integrated seat for adults and children has a higher space utilization rate and is suitable for both adults and children.

The technical solution adopted by the invention to solve the technical problems is as follows: The integrated seat for adults and children includes a body portion and a child portion.

A surface of the body portion is provided with a fixing groove for accommodating the child portion.

The child portion is embedded in the fixing groove.

The child portion includes a child main body and side wings swingable forward arranged on two sides of the child main body respectively.

In this solution, the child portion is embedded in the fixing groove when it is not needed, and in this case, the integrated seat can be used by an adult. When needed, the side wings of the child portion may be swung forward to protect the child from the sides, so that the integrated seat can be used as a regular child seat.

Preferably, a folding assembly is arranged between the child main body and each of the side wings, and the folding assembly is configured to drive an outer end of the side wing to fold and swing forward or retract backward.

The folding assembly is configured to automatically drive the side wing to fold outward so as to protect the child from the side, or to retract such that the integrated seat becomes an adult seat.

Preferably, the folding assembly includes a second linear driving member, slide rail frames, swing frames, first links and first side wing skeletons.

The child main body is provided with the second linear driving member and the slide rail frames, a moving end of the second linear driving member slides outward, the slide rail frame is provided with an arc-shaped guide hole bending forward, the swing frame is slidably fitted with the arc-shaped guide hole, two ends of the first link are respectively hinged to the moving end of the second linear driving member and the swing frame, and the swing frame is provided with the first side wing skeleton.

The second linear driving member pushes the swing frames to slide in the slide rail frames through the first links. The slide rail frame is provided with the arc-shaped guide hole fitted with the swing frame, and the arc-shaped guide hole bends forward. Therefore, when the swing frames sliding based on the arc-shaped guide holes are pushed by the first links, the swing frames and the first side wing skeletons swing forward to form a closed state from the two sides. When not needed, the swing frames and the first side wing skeletons unfold outward and retract with the pull of the first links.

Preferably, the folding assembly includes a scissor frame, push members, second side wing skeletons, second links and a first driving screw.

The scissor frame includes two clamping rods, and middle parts of the two clamping rods are hinged to the child main body through a first rotating shaft.

Two sides of the scissor frame are respectively provided with the push members, the push members are longitudinally provided with elongated holes, and ends of the two clamping rods are respectively slidably fitted in the elongated holes through sliding hooks.

Outer sides of the push members are respectively provided with the second side wing skeletons, a front and a rear of an inner end of the second side wing skeleton are distributed with first hinge points and second hinge points, the first hinge points are hinged with the child main body, and two ends of the second link are respectively hinged to the second hinge point and the push member. The first driving screw is rotatably arranged at the child main body transversely, the first driving screw is driven by a first motor, and the first driving screw is threadedly fitted with the push member.

In this solution, the two push members are respectively provided with the elongated holes fitted with the two ends of the scissor frame, so when the scissor frame closes and opens, the push members are driven to move to the middle and the two sides, i.e., the push members on the two sides are pushed to move outward or inward. Since one of the push members is threadedly fitted with the first driving screw, when the first driving screw rotates, the push members are driven to move outward or inward, so that one power member drives the two push members to move synchronously. The front and the rear of the second side wing skeleton are distributed with the first hinge points and the second hinge points, the first hinge points are hinged with the child main body, and the second hinge points are connected with the push members through the links. Therefore, when the push members move, the links push the second hinge points to rotate around the first hinge points, i.e., push the second side wing skeleton to swing around the first hinge points. In this way, the first driving screw drives, through the push members and the links, the second side wing skeletons to fold forward and retract backward.

Preferably, the folding assembly includes first driving gears, sliding members, third side wing skeletons and a second driving screw.

The second driving screw is rotatably fitted to the child main body transversely, the second driving screw is driven by a second motor, the second driving screw is threadedly fitted with the sliding members, the sliding members are slidably fitted transversely relative to the child main body, and the sliding member is transversely distributed with a first rack.

The third side wing skeleton is provided with a second rotating shaft rotatably fitted with the child main body, the second rotating shaft is provided with the first driving gear, and the first driving gear is meshed with the first rack.

The sliding members are slidably fitted transversely relative to the child main body, and the rotation of the second driving screw is utilized to provide the force to push the sliding members to slide transversely, so that the sliding members can move transversely. Since the sliding member is provided with the first rack and the third side wing skeleton is provided with the first driving gear meshed with the first rack, when the sliding member slides, the first driving gear is driven to rotate. Since the first driving gear is fixed with the third side wing skeleton through the second rotating shaft, the third side wing skeleton rotates along with the first driving gear, thereby driving the third side wing skeleton to fold forward and retract backward.

Preferably, the folding assembly includes a second driving gear, sliding push members and fourth side wing skeletons.

The second driving gear is rotatably fitted to the child main body, the second driving gear is driven by a third motor, two sides of the second driving gear are respectively provided with the sliding push members parallel with each other, the sliding push members are slidably fitted transversely relative to the child main body, and the sliding push member is provided with a second rack meshed with the second driving gear.

A front and a rear of an inner end of the fourth side wing skeleton are distributed with third hinge points and fourth hinge points, the third hinge points are hinged with the child main body, the fourth hinge points are provided as strip holes, and the sliding push member is provided with a transverse rod running through the strip holes.

Since the sliding push members are distributed in parallel on two sides of the second driving gear, when the second driving gear is rotated, the two sliding push members slide in opposite directions. The sliding push member is hinged to the sliding push member through a third link, so with the push of the sliding push members, the fourth side wing skeletons are driven to fold and swing around the first hinge points.

Preferably, the body portion and the child main body are connected through a lifting assembly and/or a rotating assembly and/or a tilting assembly.

The lifting assembly is configured to adjust a height of the child main body relative to the body portion.

The rotating assembly is configured to adjust an angle of horizontal rotation of the child main body relative to the body portion.

The tilting assembly is configured to adjust an angle of tilting of the child main body relative to the body portion.

By arranging the lifting assembly, the rotating assembly and the tilting assembly between the body portion and the child main body, the height, the angle of horizontal rotation and the tilting posture of the child main body relative to the body portion can be adjusted, so that the child sitting on the child main body is more comfortable and safer.

Preferably, the lifting assembly includes a lower pedestal, a lifting base, a driving link and a driven link.

The lower pedestal is fixed with the body portion, the lifting base is connected with the child portion, the lifting base is located above the lower pedestal, and the lifting base, and the driving link, the driven link and the lower pedestal below form a closed four-bar linkage.

An upper end of the driving link is provided with an arc-shaped toothed disc, the arc-shaped toothed disc is centred at a hinged point at the upper end of the driving link, the lifting base is provided with a third driving gear meshed with the arc-shaped toothed disc, and the third driving gear is driven by a fourth motor.

The lifting base forms the closed four-bar linkage through the driving link and the driven link, so when the driving link and the driven link swing, the lifting base can be lifted up.

When the child seat is not needed, the driving link and the driven link swing downward, the lifting base goes down to the lowest position; and when the child seat is needed, the driving link provides power and swings upward to drive the driven link and the lifting base to go up, thereby making the lifting base go up and down. Specifically, the driving link is provided with the arc-shaped toothed disc, and the fourth motor drives the third driving gear to rotate, so that the third driving gear can move around the periphery of the arc-shaped toothed disc, i.e., the position of the whole third driving gear relative to the lifting base is not changed. When the third driving gear rotates, the arc-shaped toothed disc and the driving link are driven to swing, so that the lifting base goes up with the swing of the driving link.

Preferably, at least one hinged point of the four-bar linkage is provided with a torsion spring, and the torsion spring drives the lifting base to go up.

Preferably, the lifting assembly includes a lower pedestal and a lifting base.

The lower pedestal is fixed with the body portion, the lifting base is connected with the child portion, the lifting base is located above the lower pedestal, the lifting base is slidably fitted vertically relative to the lower pedestal, the lifting base is vertically provided with a third rack, the lower pedestal is rotatably fitted with a fourth driving gear meshed with the third rack, and the fourth driving gear is driven by a fifth motor.

Since the lifting base is slidably fitted with the lower pedestal vertically and the lifting base is provided with the third rack, when the fourth driving gear meshed with the third rack is rotated, the lifting base can be driven to go up and down.

Preferably, the lifting assembly includes a lower pedestal, a lifting base and a third linear driving member.

The lower pedestal is fixed with the body portion, the lifting base is connected with the child portion, and the lifting base is located above the lower pedestal.

Two sides of the lower pedestal are respectively provided with a plurality of sets of elongated inclined holes, two sides of the lifting base are respectively provided with guide pins slidably fitted with the elongated inclined holes, and two ends of the third linear driving member are respectively hinged with the body portion and the lifting base.

The lifting base is fitted with the inclined holes through the guide pins, and the guide pins slide along the inclined holes, so that the vertical height of the lifting base can be changed. In this solution, since the inclined holes are inclined, the lifting base provided with the guide pins can go up and down conveniently when pushed.

Preferably, the rotating assembly includes a rotary toothed disc and a first driving worm, the rotary toothed disc is rotatably arranged horizontally relative to the body portion, the first driving worm is rotatably fitted to the body portion transversely, the rotary toothed disc is meshed with the first driving worm, the rotary toothed disc is connected with the child main body, and the first driving worm is driven by a sixth motor. The first driving worm drives the rotary toothed disc to rotate, so that a one-direction locking effect can be achieved. Only the first driving worm can drive the rotary toothed disc to rotate, but the rotary toothed disc cannot drive the first driving worm to rotate reversely.

The rotating assembly includes a driving gear and a driven toothed disc, the driving gear and the driven toothed disc are respectively rotatably arranged horizontally relative to the body portion, the driving gear and the driven toothed disc are meshed and connected through a toothed belt, the driven toothed disc is connected with the child main body, and the driving gear is driven by an eighth motor. By using the toothed belt to transmit power, the positions of the driving gear and the driven toothed disc can be arranged more flexibly.

Preferably, the tilting assembly includes an upper pedestal and a tilting base.

The upper pedestal is connected with the body portion, and the tilting base is connected with the child portion. Two upper ends of the upper pedestal are respectively provided with elongated guide holes with upward inclined outer ends, the tilting base is slidably fitted with the elongated guide holes, two ends of the fourth linear driving member are respectively hinged to the upper pedestal and the tilting base, and the fourth linear driving member pushes the tilting base to slide in the elongated guide holes.

Preferably, the child main body includes a child seat cushion, and a child backrest connected with each other. The body portion includes an adult seat cushion and an adult backrest.

The child seat cushion and the adult seat cushion are connected through the lifting assembly and/or the rotating assembly and/or the tilting assembly.

Each side wing includes a seat cushion side wing and a head and back side wing.

The seat cushion side wings are located at two sides of the child seat cushion, and the head and back side wings are located at two sides of the child backrest.

The child backrest includes a waist and back section and a head section, and each head and back side wing includes a waist and back side wing and a head side wing.

Two sides of the waist and back section are provided with the waist and back side wings, two sides of the head section are provided with the head side wings, the waist and back section and the head section are connected with a first linear driving member through a guide member, and the first linear driving member drives the head section to slide along the guide member.

The waist and back section and the head section arranged can protect respectively the hips and trunk of the child, so that the child is protected at the waist and back section and the head section respectively.

The first linear driving member drives the head section to slide up and down relative to the waist and back section, so that the head section can adapt to the heads of children with different heights, and children with different heights can be protected adequately.

Preferably, the guide member is a sliding rod fixed to the head section, the sliding rod is slidably fitted with the waist and back section, the first linear driving member includes a fourth driving screw, the fourth driving screw is driven by a seventh motor, one end of the fourth driving screw is rotatably fitted with the waist and back section, and the other end of the fourth driving screw is threadedly fitted with the head section.

When the fourth driving screw is rotated, the head section can be driven to move up and down through the threads.

Preferably, a plurality of first locking assemblies are arranged between the child backrest and the adult backrest, each first locking assembly includes a lock hook and a lock rod, a shank of the lock hook is hinged to the adult backrest, the lock rod is arranged at the child backrest corresponding to a swing range of the lock hook, and the lock hook is driven by a ninth motor to swing to catch or leave the lock rod.

With the lock hooks, the adult backrest can be easily and quickly locked relative to the child backrest.

Preferably, a second locking assembly is arranged between the child backrest and the adult backrest, the second locking assembly includes a second locking motor, a fifth driving screw, movable blocks, bolts and sockets, the fifth driving screw is rotatably fitted to the child backrest transversely, two ends of the fifth driving screw are threaded in opposite directions, the fifth driving screw is driven to rotate by the second locking motor, the two ends of the fifth driving screw are respectively threadedly fitted with the movable blocks, the movable blocks are slidably fitted transversely relative to the child backrest, an inner side of each movable block is provided with the bolt, and ends of the adult backrest corresponding to the bolts are provided with the sockets.

The fifth driving screw can drive the movable blocks to slide transversely so as to drive the bolts to move in or out of the sockets. The two ends of the fifth driving screw are threaded in opposite directions, so the rotating fifth driving screw can drive the movable blocks to move close to or away from each other, thereby driving the bolts to move into the sockets or out of the sockets.

The invention has the following beneficial effects.

According to this solution, the integrated seat for adults and children can switch between an adult seat and a child seat and can effectively protect the child from two sides after switching to the child seat. Moreover, the horizontal direction and the angle of tilting of the child seat can be freely adjusted so as to protect the child more effectively. The integrated seat for adults and children has a higher space utilization rate and is suitable for both adults and children.

### BRIEF DESCRIPTION OF THE DRAWINGS

In order to more clearly illustrate the embodiments of the invention or the technical solutions in the prior art, the accompanying drawings used in the description of the embodiments will be briefly described below. Apparently, the accompanying drawings in the following description are only 27 drawings of the invention, and those skilled in the art can obtain other drawings according to these drawings without any creative work.
FIG. 1 is a three-dimensional view of Embodiment 1 according to the invention;
FIG. 2 is a schematic view of Embodiment 1 with a surface structure of a child portion removed according to the invention;
FIG. 3 is a schematic view of an internal skeleton of an adult backrest of Embodiment 1 according to the invention;
FIG. 4 is a three-dimensional view of a folding assembly of Embodiment 1 according to the invention;
FIG. 5 is a top view of a folding assembly of Embodiment 2 according to the invention;
FIG. 6 is a front view of the folding assembly of Embodiment 2 according to the invention;
FIG. 7 is an exploded view of the folding assembly of Embodiment 2 according to the invention;
FIG. 8 is a front view of a folding assembly of Embodiment 3 according to the invention;
FIG. 9 is an exploded view of the folding assembly of Embodiment 3 according to the invention;
FIG. 10 is an exploded view of a folding assembly of Embodiment 4 according to the invention;
FIG. 11 is a schematic view of a lifting assembly and a rotating assembly of Embodiments 6, 7 and 10 according to the invention;
FIG. 12 is a three-dimensional view of the lifting assembly of Embodiments 6 and 7 according to the invention;
FIG. 13 is an exploded view of a lifting assembly of Embodiment 8 according to the invention;
FIG. 14 is a top view of a lifting assembly of Embodiment 9 according to the invention;
FIG. 15 is a front view of the lifting assembly of Embodiment 9 according to the invention;
FIG. 16 is an exploded view of the lifting assembly of Embodiment 9 according to the invention;
FIG. 17 is a top view of a rotating assembly of Embodiment 11 according to the invention;
FIG. 18 is a front view of the rotating assembly of Embodiment 11 according to the invention;
FIG. 19 is an exploded view of Embodiment 11 according to the invention;
FIG. 20 is a schematic view of an upper pedestal and a fourth linear driving member of Embodiment 12 according to the invention;
FIG. 21 is a schematic view of a lower pedestal, the upper pedestal and a tilting base of Embodiment 12 according to the invention;
FIG. 22 is a schematic view of the upper pedestal and a folding assembly of a seat cushion side wing of Embodiment 12 according to the invention;
FIG. 23 is a schematic view of the lower pedestal, the upper pedestal, the tilting base and a child seat cushion of Embodiment 12 according to the invention;
FIG. 24 is a schematic view of the upper pedestal and the tilting base of Embodiment 12 according to the invention;
FIG. 25 is a schematic outside view of the seat of Embodiment 13 according to the invention;
FIG. 26 is a schematic view of first locking assemblies, a second locking assembly and a first linear driving member between a child backrest and an adult backrest of Embodiments 13 and 14 according to the invention; and
FIG. 27 is a schematic view of the first locking assembly of Embodiment 14 according to the invention.

In the figures, the numerical references refer to the following elements:
1, child portion; 101, child main body; 1011, child seat cushion; 1012, child backrest; 10121, waist and back section; 10122, head section; 102, side wing; 1021, seat cushion side wing; 1022, head and back side wing; 10221, waist and back side wing; 10222, head side wing;
2, body portion; 201, adult seat cushion; 202, adult backrest; 2021, fixing hole; 203, adult headrest; 2031, insertion rod;
301, second linear driving member; 302, slide rail frame; 303, swing frame; 304, first link; 305, first side wing skeleton; 306, arc-shaped guide hole; 307, scissor frame; 3071, clamping rod; 3072, first rotating shaft; 308, push member; 309, second link; 310, first driving screw; 311, elongated hole; 312, second side wing skeleton; 3121, first hinge point; 3122, second hinge point; 313, first motor; 314, first driving gear; 315, sliding member; 316, third side wing skeleton; 317, second driving screw; 318, second motor; 319, first rack; 320, second rotating shaft; 323, second driving gear; 324, sliding push member; 325, fourth side wing skeleton; 326, third motor; 327, second rack; 328, third hinge point; 329, fourth hinge point; 330, transverse rod;
401, lower pedestal; 402, lifting base; 403, driving link; 404, driven link; 405, arc-shaped toothed disc; 406, third driving gear; 407, fourth motor; 408, torsion spring; 409, third rack; 410, fourth driving gear; 411, fifth motor; 412, elongated inclined hole; 413, guide pin; 414, third linear driving member;
501, rotary toothed disc; 502, first driving worm; 503, sixth motor; 504, driving gear; 505, driven toothed disc; 506, toothed belt;
601, upper pedestal; 602, tilting base; 603, elongated guide hole; 604, fourth linear driving member;
701, guide member; 702, fourth driving screw; 703, seventh motor; 704, nut sleeve;
801, lock hook; 802, lock rod; 803, driven worm gear; 804, second driving worm; 805, elongated arc hole; 806, guiding pin; 807, ninth motor;
901, second locking motor; 902, fifth driving screw; 903, movable block; 904, bolt; 905, socket.

### DESCRIPTION OF THE EMBODIMENTS

To understand the invention more comprehensively, the invention will be further described in detail in conjunction with the accompanying drawings and embodiments, and the embodiments are merely used for explaining the invention and are not intended to limit the scope of protection of the invention.

### Embodiment 1

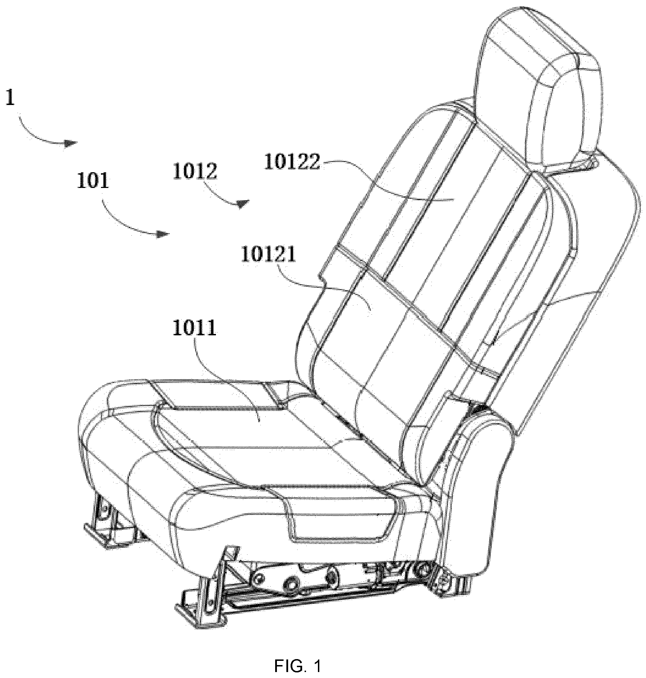

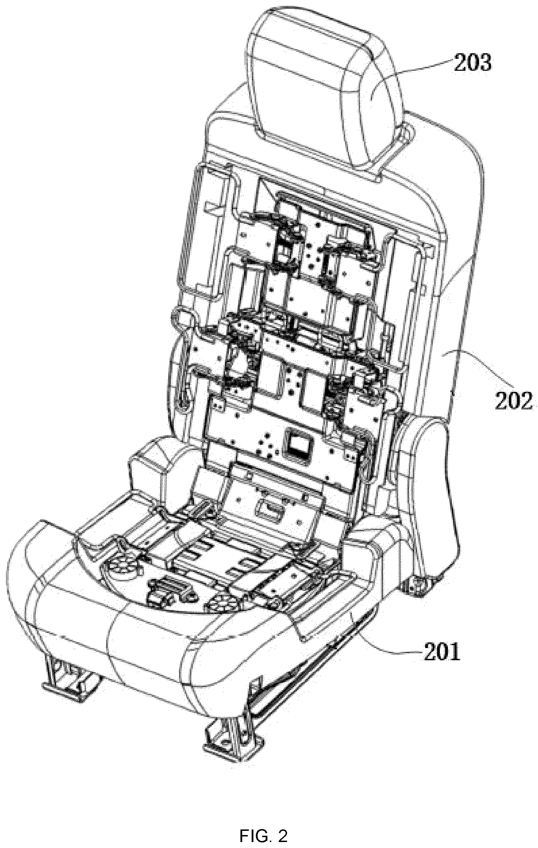

As shown in FIG. 1, FIG. 2 and FIG. 25, the integrated seat for adults and children includes a body portion 2 and a child portion 1.

A surface of the body portion 2 is provided with a fixing groove for accommodating the child portion 1.

The child portion 1 is embedded in the fixing groove.

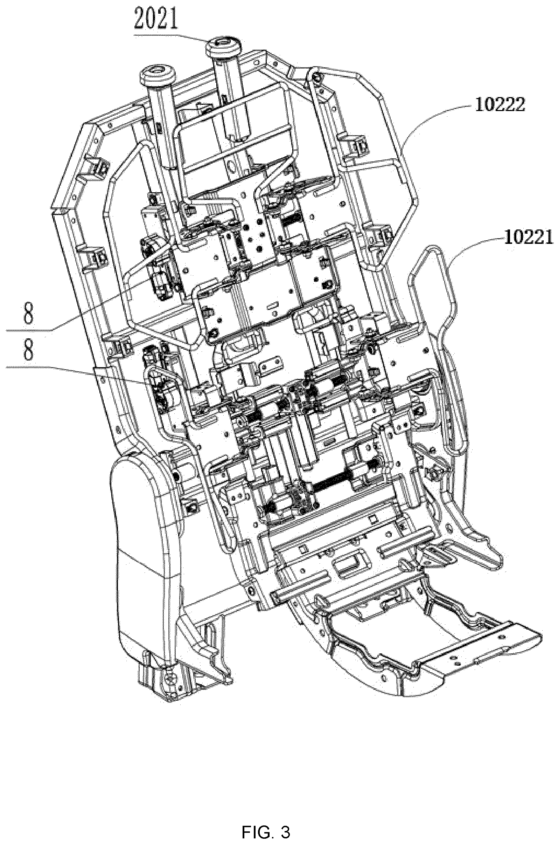

As shown in FIG. 3, the child portion 1 includes a child main body 101 and side wings 102 swingable forward arranged on two sides of the child main body 101 respectively.

In this solution, the child portion 1 is embedded in the fixing groove when it is not needed, and in this case, the integrated seat can be used by an adult. When needed, the side wings 102 of the child portion 1 may be swung forward to protect the child from the sides, so that the integrated seat can be used as a regular child seat.

Of course, like the conventional car seat, the seat in this embodiment is provided with a seat belt. Specifically, the child portion 1 is provided with a five-point seat belt.

As shown in FIG. 3, a folding assembly is arranged between the child main body 101 and each of the side wings 102, and the folding assembly is configured to drive an outer end of the side wing 102 to fold and swing forward or retract backward.

The folding assembly is configured to automatically drive the side wing 102 to fold outward so as to protect the child from the side, or to retract such that the integrated seat becomes an adult seat.

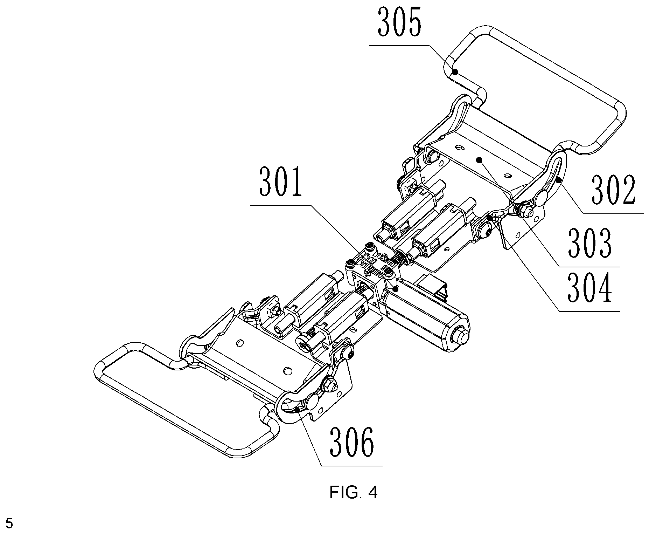

As shown in FIG. 4, the folding assembly includes a second linear driving member 301, slide rail frames 302, swing frames 303, first links 304 and first side wing skeletons 305.

The child main body 101 is provided with the second linear driving member 301 and the slide rail frames 302, a moving end of the second linear driving member 301 slides outward, the slide rail frame 302 is provided with an arc-shaped guide hole 306 bending forward, the swing frame 303 is slidably fitted with the arc-shaped guide hole 306, two ends of the first link 304 are respectively hinged to the moving end of the second linear driving member 301 and the swing frame 303, and the swing frame 303 is provided with the first side wing skeleton 305.

The second linear driving member 301 pushes the swing frames 303 to slide in the slide rail frames 302 through the first links 304. The slide rail frame 302 is provided with the arc-shaped guide hole 306 fitted with the swing frame 303, and the arc-shaped guide hole 306 bends forward. Therefore, when the swing frames 303 sliding based on the arc-shaped guide holes 306 are pushed by the first links 304, the swing frames 303 and the first side wing skeletons 305 swing forward to form a closed state from the two sides. When not needed, the swing frames 303 and the first side wing skeletons 305 unfold outward and retract with the pull of the first links 304.

The arc-shaped guide holes 306 are respectively arranged corresponding to the two sides of the swing frame 303, the two sides of the swing frame 303 are respectively provided with sliding pins extending laterally into the arc-shaped guide holes 306, and there are at least two sets of sliding pins, so as to control the direction of the swing frame in the arc-shaped guide hole 306.

In this embodiment, the second linear driving member 301 includes a second driving screw 317, a first sliding rod and sliders, the second driving screw 317 is rotatably fitted to the child main body 101 transversely, the second driving screw 317 is driven by a fourth motor 407, two ends of the second driving screw 317 are threaded in opposite directions, the two ends of the second driving screw 317 are respectively threadedly fitted with the sliders, the first sliding rod and the second driving screw 317 are arranged in parallel, the first sliding rod is slidably fitted relative to the child main body 101, ends of the first sliding rod are fixed with the sliders, and the slider is hinged with an inner end of the first link 304.

### Embodiment 2

Compared with Embodiment 1, this embodiment further includes the following distinctive technical features.

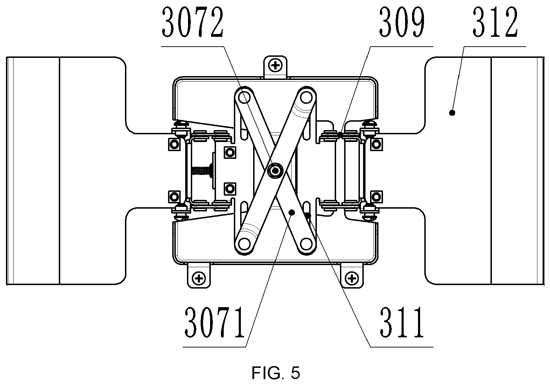

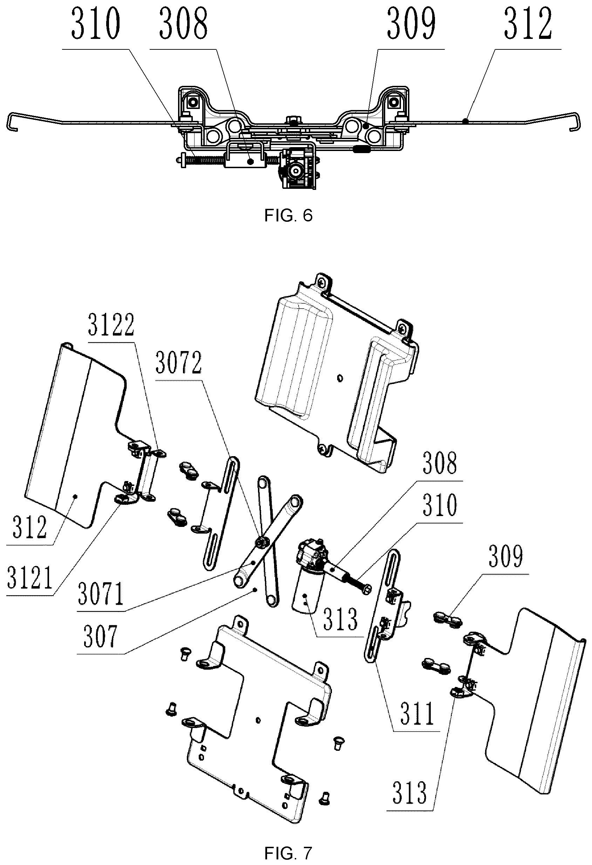

As shown in FIG. 5 and FIG. 6, the folding assembly includes a scissor frame 307, push members 308, second side wing skeletons 312, second links 309 and a first driving screw 310.

The scissor frame 307 includes two clamping rods 3071, and middle parts of the two clamping rods 3071 are hinged to the child main body 101 through a first rotating shaft 3072.

Two sides of the scissor frame 307 are respectively provided with the push members 308, the push members 308 are longitudinally provided with elongated holes 311 and ends of the two clamping rods 3071 are respectively slidably fitted in the elongated holes 311 through sliding hooks.

As shown in FIG. 7, outer sides of the push members 308 are respectively provided with the second side wing skeletons 312, a front and a rear of an inner end of the second side wing skeleton 312 are distributed with first hinge points 3121 and second hinge points 3122, the first hinge points 3121 are hinged with the child main body 101, and two ends of the second link 309 are respectively hinged to the second hinge point 3122 and the push member 308. The first driving screw 310 is rotatably arranged at the child main body 101 transversely, the first driving screw 310 is driven by a first motor 313, and the first driving screw 310 is threadedly fitted with the push member 308.

In this solution, the two push members 308 are respectively provided with the elongated holes 311 fitted with the two ends of the scissor frame 307, so when the scissor frame 307 closes and opens, the push members 308 are driven to move to the middle and the two sides, i.e., the push members 308 on the two sides are pushed to move outward or inward. Since one of the push members 308 is threadedly fitted with the first driving screw 310, when the first driving screw 310 rotates, the push members 308 are driven to move outward or inward, so that one power member drives the two push members 308 to move synchronously. The front and the rear of the second side wing skeleton 312 are distributed with the first hinge points 3121 and the second hinge points 3122, the first hinge points 3121 are hinged with the child main body 101, and the second hinge points 3122 are connected with the push members 308 through the links. Therefore, when the push members 308 move, the links push the second hinge points 3122 to rotate around the first hinge points 3121, i.e., push the second side wing skeleton 312 to swing around the first hinge points 3121. In this way, the first driving screw drives, through the push members 308 and the links, the second side wing skeletons 312 to fold forward and retract backward.

### Embodiment 3

Compared with Embodiment 1, this embodiment further includes the following distinctive technical features.

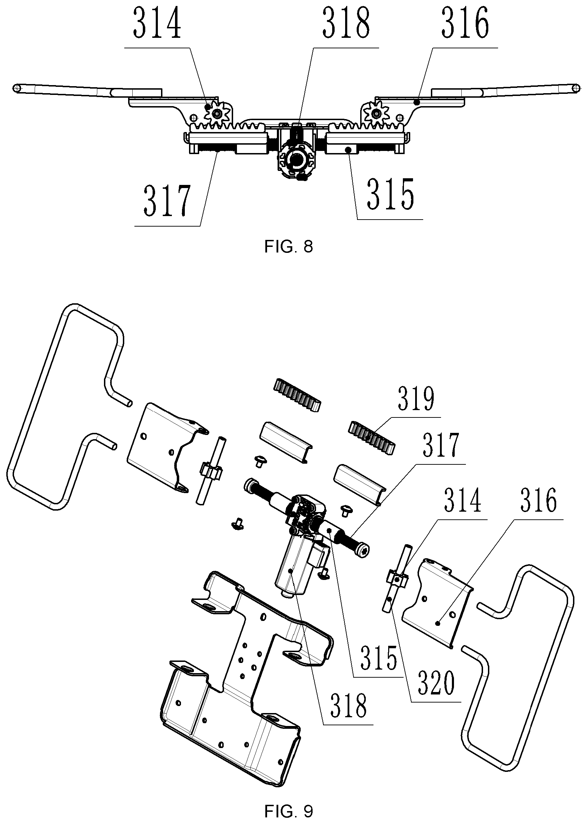

As shown in FIG. 8 and FIG. 9, the folding assembly includes first driving gears 314, sliding members 315, third side wing skeletons 316 and a second driving screw 317.

The second driving screw 317 is rotatably fitted to the child main body 101 transversely, the second driving screw 317 is driven by a second motor 318, the second driving screw 317 is threadedly fitted with the sliding members 315, the sliding members 315 are slidably fitted transversely relative to the child main body 101, and the sliding member 315 is transversely distributed with a first rack 319.

The third side wing skeleton 316 is provided with a second rotating shaft 320 rotatably fitted with the child main body 101, the second rotating shaft 320 is provided with the first driving gear 314, and the first driving gear 314 is meshed with the first rack 319.

The sliding members 315 are slidably fitted transversely relative to the child main body 101, and the rotation of the second driving screw 317 is utilized to provide the force to push the sliding members 315 to slide transversely, so that the sliding members 315 can move transversely. Since the sliding member 315 is provided with the first rack 319 and the third side wing skeleton 316 is provided with the first driving gear 314 meshed with the first rack 319, when the sliding member 315 slides, the first driving gear 314 is driven to rotate. Since the first driving gear 314 is fixed with the third side wing skeleton 316 through the second rotating shaft 320, the third side wing skeleton 316 rotates along with the first driving gear 314, thereby driving the third side wing skeleton 316 to fold forward and retract backward.

### Embodiment 4

Compared with Embodiment 1, this embodiment further includes the following distinctive technical features.

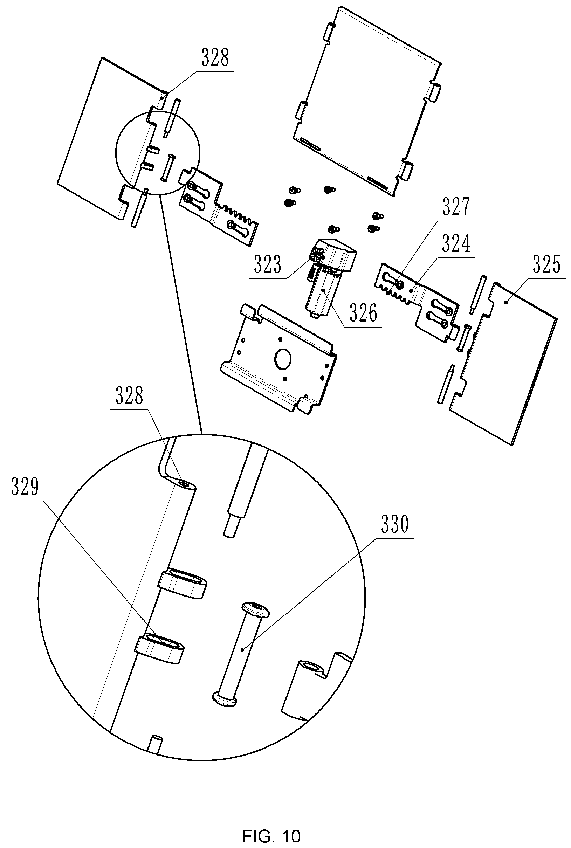

As shown in FIG. 10, the folding assembly includes a second driving gear 323, sliding push members 324 and side wing 102 skeletons.

The second driving gear 323 is rotatably fitted to the child main body 101, the second driving gear 323 is driven by a third motor 326, two sides of the second driving gear 323 are respectively provided with the sliding push members 324 parallel with each other, the sliding push members 324 are slidably fitted transversely relative to the child main body 101, and the sliding push member 324 is provided with a second rack 327 meshed with the second driving gear 323.

A front and a rear of an inner end of the side wing 102 skeleton are distributed with third hinge points 328 and fourth hinge points 329, the third hinge points 328 are hinged with the child main body 101, the fourth hinge points 329 are provided as strip holes, and the sliding push member 324 is provided with a transverse rod 330 running through the strip holes. When the sliding push member slides, the transverse rod 330 can change its position in the strip holes. The sliding push member 324 is driven by the rotation of the second driving gear 323.

### Embodiment 5

As shown in FIG. 1, FIG. 2 and FIG. 25, compared with Embodiment 1, this embodiment further includes the following distinctive technical features.

The body portion 2 and the child main body 101 are connected through a lifting assembly, a rotating assembly and a tilting assembly.

The lifting assembly is configured to adjust a height of the child main body 101 relative to the body portion 2.

The rotating assembly is configured to adjust an angle of horizontal rotation of the child main body 101 relative to the body portion 2.

The tilting assembly is configured to adjust an angle of tilting of the child main body 101 relative to the body portion 2.

By arranging the lifting assembly, the rotating assembly and the tilting assembly between the body portion 2 and the child main body 101, the height, the angle of horizontal rotation and the tilting posture of the child main body relative to the body portion 2 can be adjusted, so that the child sitting on the child main body is more comfortable and safer.

### Embodiment 6

Compared with Embodiment 5, this embodiment further includes the following distinctive technical features.

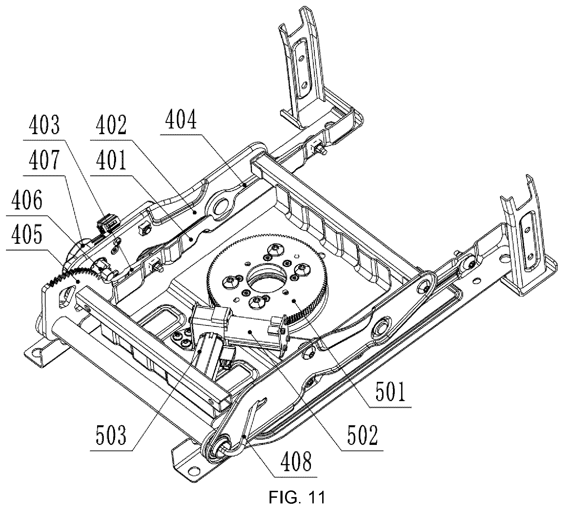

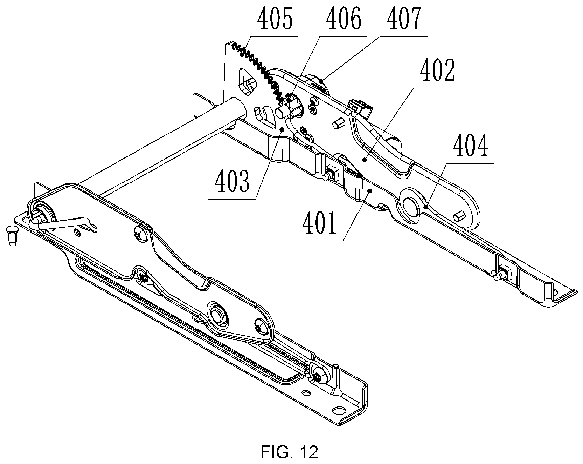

As shown in FIG. 11 and FIG. 12, the lifting assembly includes a lower pedestal 401, a lifting base 402, a driving link 403 and a driven link 404.

The lower pedestal 401 is fixed with the body portion 2, the lifting base 402 is connected with the child portion 1, the lifting base 402 is located above the lower pedestal 401, and the lifting base 402, and the driving link 403, the driven link 404 and the lower pedestal 401 below form a closed four-bar linkage.

An upper end of the driving link 403 is provided with an arc-shaped toothed disc 405, the arc-shaped toothed disc 405 is centred at a hinged point at the upper end of the driving link 403, the lifting base 402 is provided with a third driving gear 406 meshed with the arc-shaped toothed disc 405, and the third driving gear 406 is driven by a fourth motor 407.

The lifting base 402 forms the closed four-bar linkage through the driving link 403 and the driven link 404, so when the driving link 403 and the driven link 404 swing, the lifting base 402 can be lifted up.

When the child seat is not needed, the driving link 403 and the driven link 404 swing downward, the lifting base 402 goes down to the lowest position; and when the child seat is needed, the driving link 403 provides power and swings upward to drive the driven link 404 and the lifting base 402 to go up, thereby making the lifting base go up and down. Specifically, the driving link 403 is provided with the arc-shaped toothed disc 405, and the fourth motor 407 drives the third driving gear 406 to rotate, so that the third driving gear 406 can move around the periphery of the arc-shaped toothed disc 405, i.e., the position of the whole third driving gear 406 relative to the lifting base 402 is not changed. When the third driving gear 406 rotates, the arc-shaped toothed disc 405 and the driving link 403 are driven to swing, so that the lifting base 402 goes up with the swing of the driving link 403.

### Embodiment 7

As shown in FIG. 11 and FIG. 12, compared with Embodiment 6, this embodiment further includes the following distinctive technical features.

At least one hinged point of the four-bar linkage is provided with a torsion spring 408, and the torsion spring 408 drives the lifting base 402 to go up.

### Embodiment 8

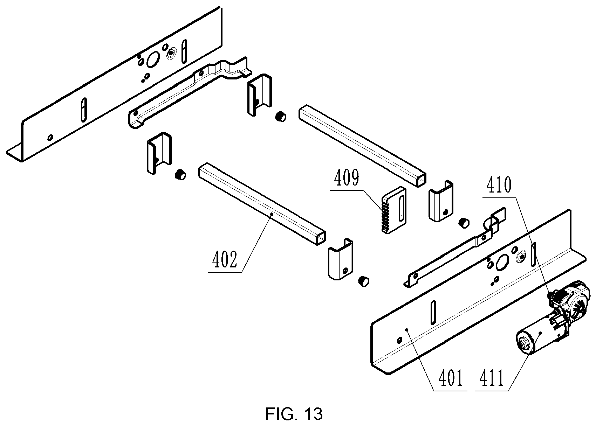

As shown in FIG. 13, compared with Embodiment 5, this embodiment further includes the following distinctive technical features.

The lifting assembly includes a lower pedestal 401 and a lifting base 402.

The lower pedestal 401 is fixed with the body portion 2, the lifting base 402 is connected with the child portion 1, the lifting base 402 is located above the lower pedestal 401, the lifting base 402 is slidably fitted vertically relative to the lower pedestal 401, the lifting base 402 is vertically provided with a third rack 409, the lower pedestal 401 is rotatably fitted with a fourth driving gear 410 meshed with the third rack 409, and the fourth driving gear 410 is driven by a fifth motor 411.

### Embodiment 9

Compared with Embodiment 5, this embodiment further includes the following distinctive technical features.

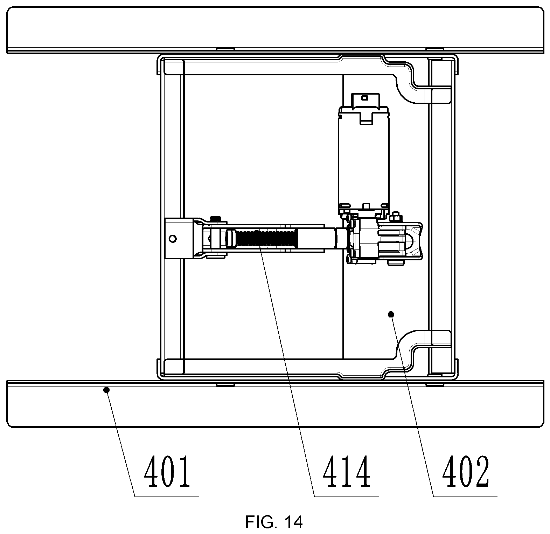

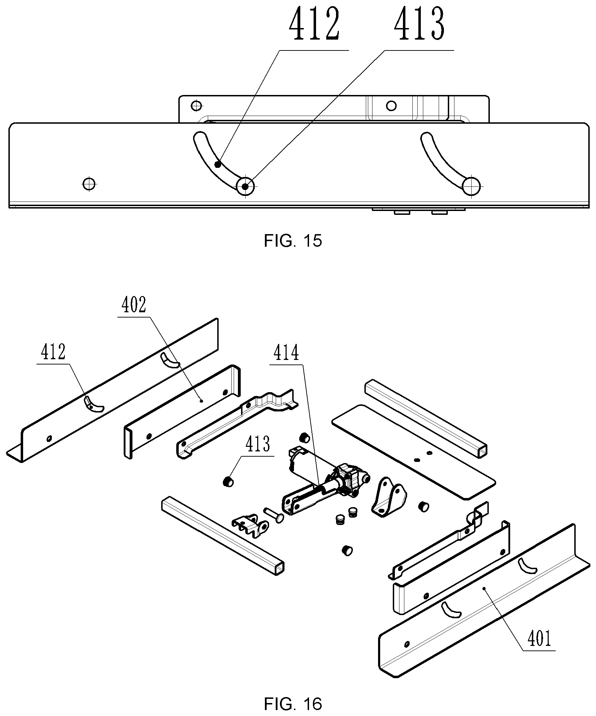

As shown in FIG. 14, FIG. 15 and FIG. 16, the lifting assembly includes a lower pedestal 401, a lifting base 402 and a third linear driving member 414.

The lower pedestal 401 is fixed with the body portion 2, the lifting base 402 is connected with the child portion 1, and the lifting base 402 is located above the lower pedestal 401.

Two sides of the lower pedestal 401 are respectively provided with a plurality of sets of elongated inclined holes 412, two sides of the lifting base 402 are respectively provided with guide pins 413 slidably fitted with the elongated inclined holes 412, and two ends of the third linear driving member 414 are respectively hinged with the body portion 2 and the lifting base 402.

### Embodiment 10

Compared with Embodiment 5, this embodiment further includes the following distinctive technical features.

As shown in FIG. 11, the rotating assembly includes a rotary toothed disc 501 and a first driving worm 502, the rotary toothed disc 501 is rotatably arranged horizontally relative to the body portion 2, the first driving worm 502 is rotatably fitted to the body portion 2 transversely, the rotary toothed disc 501 is meshed with the first driving worm 502, the rotary toothed disc 501 is connected with the child main body 101, and the first driving worm 502 is driven by a sixth motor 503. The first driving worm 502 drives the rotary toothed disc 501 to rotate, so that a one-direction locking effect can be achieved. Only the first driving worm 502 can drive the rotary toothed disc 501 to rotate, but the rotary toothed disc 501 cannot drive the first driving worm 502 to rotate reversely.

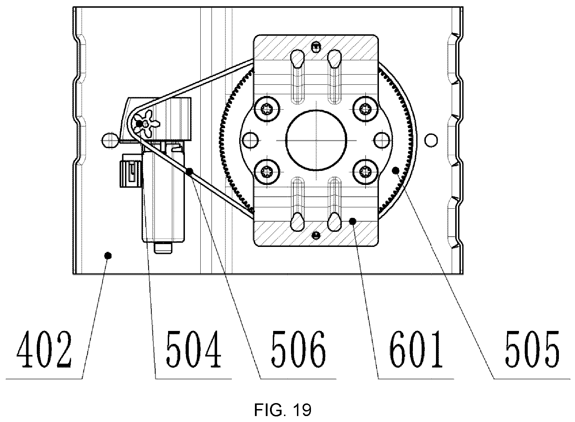

As shown in FIG. 19, the upper pedestal 601 and the lifting base 402 are rotatably fitted through the toothed disc, and the first driving worm 502 is rotated to drive the rotary toothed disc 501 and the upper pedestal 601 to rotate, so that the horizontal direction of the child portion 1 can be changed. Specifically, in practice, the child portion 1 may be reversed front and rear to protect the child more effectively and better protect against the impact from the front.

### Embodiment 11

Compared with Embodiment 5, this embodiment further includes the following distinctive technical features.

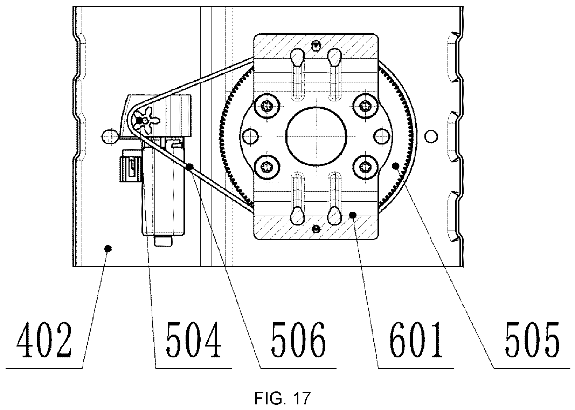

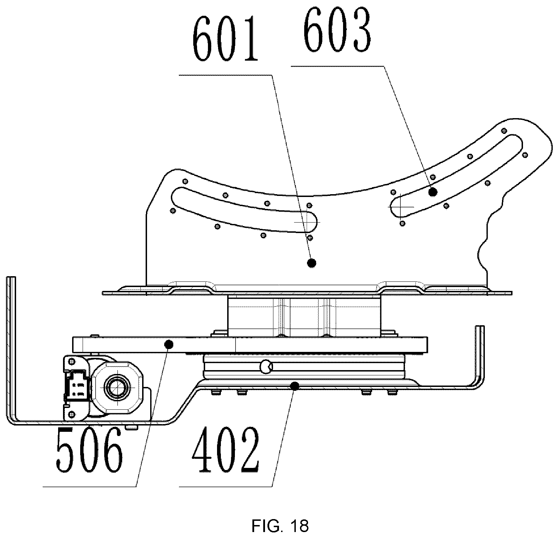

As shown in FIG. 17, FIG. 18 and FIG. 19, the rotating assembly includes a driving gear 504 and a driven toothed disc 505, the driving gear 504 and the driven toothed disc 505 are respectively rotatably arranged horizontally relative to the body portion 2, the driving gear 504 and the driven toothed disc 505 are meshed and connected through a toothed belt 506, the driven toothed disc 505 is connected with the child main body 101, and the driving gear 504 is driven by an eighth motor. By using the toothed belt 506 to transmit power, the positions of the driving gear 504 and the driven toothed disc 505 can be arranged more flexibly.

### Embodiment 12

Compared with Embodiment 5, this embodiment further includes the following distinctive technical features.

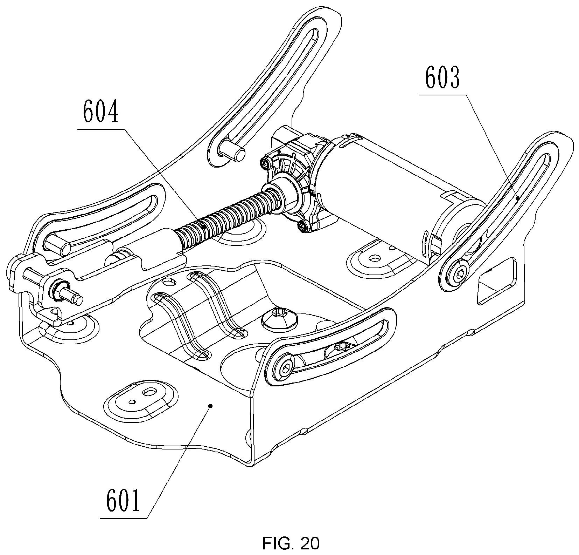

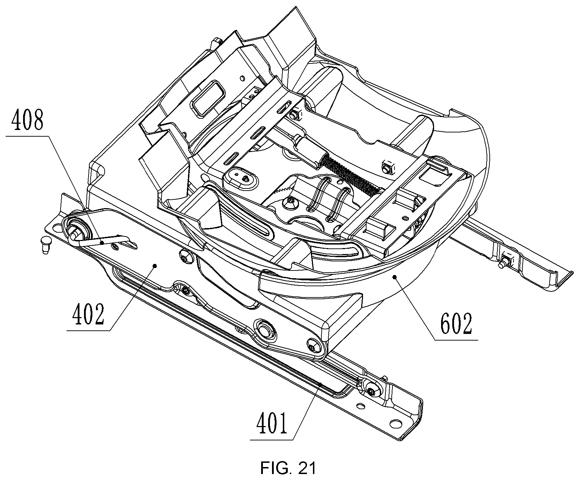

As shown in FIG. 20 and FIG. 21, the tilting assembly includes an upper pedestal 601 and a tilting base 602.

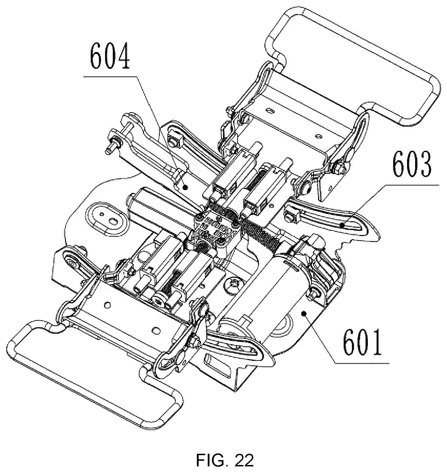

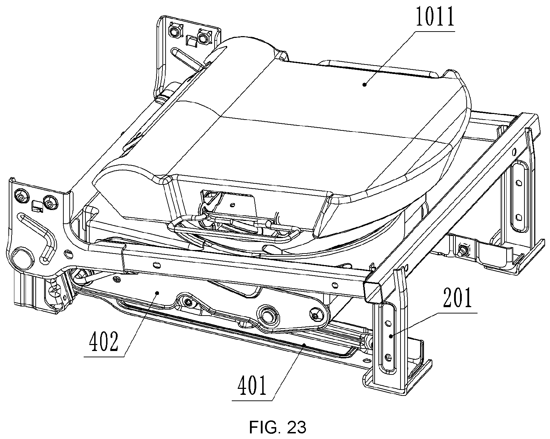

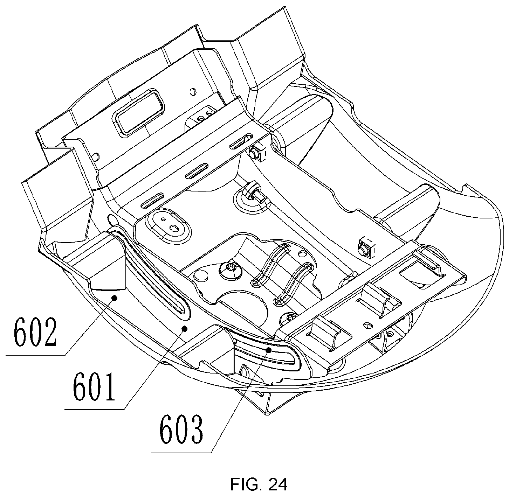

As shown in FIG. 22, FIG. 23 and FIG. 24, the upper pedestal 601 is connected with the body portion 2, and the tilting base 602 is connected with the child portion 1. Two upper ends of the upper pedestal 601 are respectively provided with elongated guide holes 603 with upward inclined outer ends, the tilting base 602 is slidably fitted with the elongated guide holes 603, two ends of the fourth linear driving member 604 are respectively hinged to the upper pedestal 601 and the tilting base 602, and the fourth linear driving member 604 pushes the tilting base 602 to slide in the elongated guide holes 603.

As shown in FIG. 22, the elongated guide holes 603 are straight, and of course, they may be arc-shaped. The front and the rear of the upper pedestal 601 are respectively provided with the two elongated guide holes 603 corresponding to the two sides of the tilting base 602, the two sides of the tilting base 602 are respectively provided with sliding pins extending into the elongated guide holes 603, and one elongated guide hole 603 is fitted with one sliding pin.

In this embodiment, the fourth linear driving member 604 includes the fourth motor 407 and a connecting base, the fourth motor 407 is hinged with the upper pedestal 601, an output shaft of the fourth motor 407 is linked with a third driving screw, the third driving screw is threadedly fitted with the connecting base, and the connecting base is hinged with the tilting base 602.

The fourth linear driving member 604 may drive the tilting base 602 to slide in the elongated guide holes 603. Since the outer ends of the elongated guide holes 603 are inclined upward, when the tilting base 602 is pulled forward, the front of the tilting base 602 tilts upward; and when the tilting base 602 is pulled backward, the rear of the tilting base 602 tilts upward, so that the tilting base 602 can tilt up and down.

It should be noted that the third linear driving member 414 and the fourth linear driving member 604 have the same structural principle.

### Embodiment 13

Compared with Embodiment 5, this embodiment further includes the following distinctive technical features.

As shown in FIG. 1, FIG. 2 and FIG. 25, the child main body 101 includes a child seat cushion 1011 and a child backrest 1012 connected with each other. The body portion 2 includes an adult seat cushion 201, an adult backrest 202 and an adult headrest 203.

The child seat cushion 1011 and the adult seat cushion 201 are connected through the lifting assembly/the rotating assembly and the tilting assembly.

Each side wing 102 includes a seat cushion side wing 1021 and a head and back side wing 1022.

The seat cushion side wings 1021 are located at two sides of the child seat cushion 1011, and the head and back side wings 1022 are located at two sides of the child backrest 1012.

The child backrest 1012 includes a waist and back section 10121 and a head section 10122, and each head and back side wing 1022 includes a waist and back side wing 10221 and a head side wing 10222.

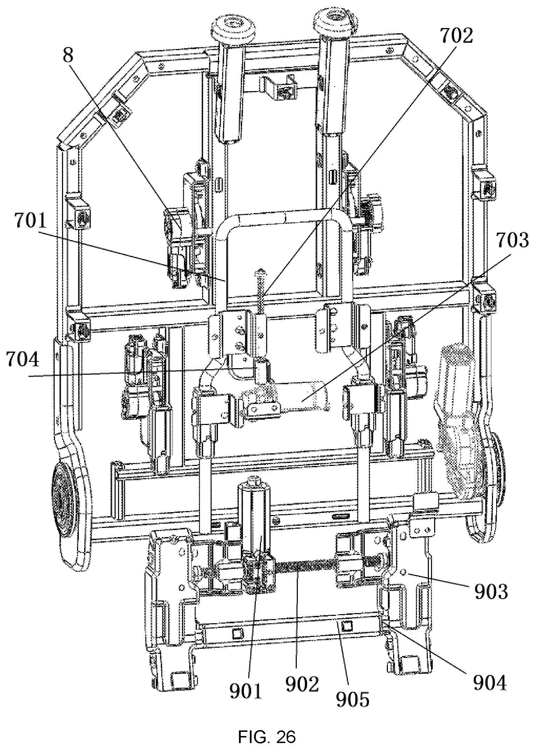

Two sides of the waist and back section 10121 are provided with the waist and back side wings 10221, and two sides of the head section 10122 are provided with the head side wings 10222. As shown in FIG. 26, the waist and back section 10121 and the head section 10122 are connected with a first linear driving member through a guide member 701, and the first linear driving member drives the head section 10122 to slide along the guide member 701. The guide member 701 is a cylindrical rod structure arranged vertically.

The waist and back section 10121 and the head section 10122 arranged can respectively protect the hips and trunk of the child, so that the child is protected at the waist and back section 10121 and the head section 10122 respectively.

The first linear driving member drives the head section 10122 to slide up and down relative to the waist and back section 10121, so that the head section can adapt to the heads of children with different heights, and children with different heights can be protected adequately.

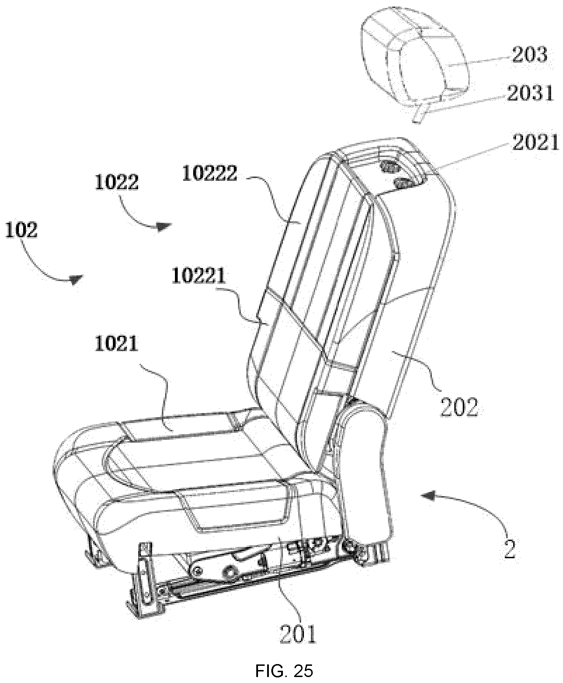

As shown in FIG. 3 and FIG. 25, a lower part of the adult headrest 203 is provided with insertion rods 2031, and an upper part of the adult backrest 202 is provided with fixing holes 2021 into which the insertion rods 2031 can be inserted, so that the head of the adult can be supported.

As shown in FIG. 26, the guide member 701 is a sliding rod fixed to the head section 10122, the sliding rod is slidably fitted with the waist and back section 10121, the first linear driving member includes a fourth driving screw 702, the fourth driving screw 702 is driven by a seventh motor 703, one end of the fourth driving screw 702 is rotatably fitted with the waist and back section 10121, and the other end of the fourth driving screw 702 is threadedly fitted with the head section 10122. Specifically, the head section 10122 is provided with a nut sleeve 704 fitted with the fourth driving screw 702.

When the fourth driving screw 702 is rotated, the head section 10122 can be driven to move up and down through the threads.

### Embodiment 14

Compared with Embodiment 12, this embodiment further includes the following distinctive technical features.

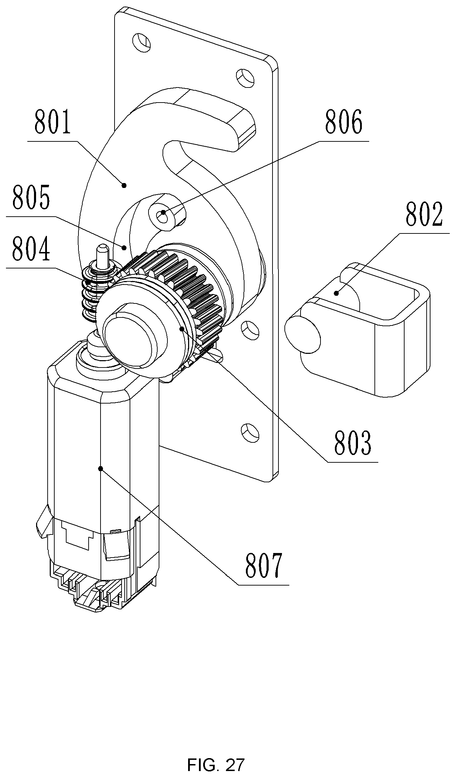

As shown in FIG. 26 and FIG. 27, a plurality of first locking assemblies are arranged between the child backrest 1012 and the adult backrest 202, each first locking assembly includes a lock hook 801 and a lock rod 802, a shank of the lock hook 801 is hinged to the adult backrest 202, the lock rod 802 is arranged at the child backrest 1012 corresponding to a swing range of the lock hook 801, and the lock hook 801 is driven by a ninth motor 807 to swing to catch or leave the lock rod 802.

The lock hook 801 is rotatably hinged to the adult backrest 202 through a third rotating shaft, the lock hook 801 is fixed with the third rotating shaft, the lock hook 801 is provided with an elongated arc hole 805, the elongated arc hole 805 is centred at the third rotating shaft, the adult backrest 202 is provided with a guiding pin 806 extending into the elongated arc hole 805, and the guiding pin 806 is slidably fitted with the elongated arc hole 805. The third rotating shaft is coaxially fixed with a driven worm gear 803, and an output of the ninth motor 807 is provided with a second driving worm 804 meshed with the driven worm gear 803.

With the lock hooks 801, the adult backrest 202 can be easily and quickly locked relative to the child backrest 1012.

As shown in FIG. 26, a second locking assembly is arranged between the child backrest 1012 and the adult backrest 202, the second locking assembly includes a second locking motor 901, a fifth driving screw 902, movable blocks 903, bolts 904 and sockets 905, the fifth driving screw 902 is rotatably fitted to the child backrest 1012 transversely, two ends of the fifth driving screw 902 are threaded in opposite directions, the fifth driving screw 902 is driven to rotate by the second locking motor 901, the two ends of the fifth driving screw 902 are respectively threadedly fitted with the movable blocks 903, the movable blocks 903 are slidably fitted transversely relative to the child backrest 1012, an inner side of each movable block 903 is provided with the bolt 904, and ends of the adult backrest 202 corresponding to the bolts 904 are provided with the sockets 905.

The fifth driving screw 902 can drive the movable blocks 903 to slide transversely so as to drive the bolts 904 to move in or out of the sockets 905. The two ends of the fifth driving screw 902 are threaded in opposite directions, so the rotating fifth driving screw 902 can drive the movable blocks 903 to move close to or away from each other, thereby driving the bolts 904 to move into the sockets 905 or out of the sockets 905.

The invention has the following beneficial effects.

According to this solution, the integrated seat for adults and children can switch between an adult seat and a child seat and can effectively protect the child from two sides after switching to the child seat. Moreover, the horizontal direction and the angle of tilting of the child seat can be freely adjusted so as to protect the child more effectively. The integrated seat for adults and children has a higher space utilization rate and is suitable for both adults and children.

It should be noted that in Embodiments 4 to 11, the connection relationship between the lifting assembly, the rotating assembly and the tilting assembly is as follows: the lower pedestal 401 of the lifting assembly is arranged at the body portion 2, specifically at the adult seat cushion 201, the lifting base 402 of the lifting assembly is rotatably fitted with the rotary toothed disc 501, the sixth motor 503 is arranged at the lifting base 402, the rotary toothed disc 501 is fixed with the upper pedestal 601 of the tilting assembly, and the tilting base 602 of the tilting assembly is fixed with the child portion 1, specifically with the child seat cushion 1011 of the child portion 1.

The whole solution is used as follows: first, the child backrest 1012 and the adult backrest 202 directly contact the first locking assemblies and the second locking assembly, and the side wings 102 are swung forward; then, the child portion 1 is lifted up through the lifting assembly; next, the horizontal direction of the child portion 1 may be changed through the rotating assembly, for example, the child portion may be reversed front and rear such that the backrest is at the front; and in addition, the angle of tilting of the child portion 1 may be adjusted through the tilting assembly such that the child portion is in a half-lying or vertical sitting posture.

The technical features of the above embodiments can be arbitrarily combined. For the sake of concise description, not all possible combinations of the technical features in the above embodiments are described. However, as long as there is no contradiction in the combination of these technical features, it should be considered as falling within the scope recorded in this specification.

In the above-mentioned embodiments, only several implementations of this application are expressed, which are specifically described in detail, but this should not be understood as limiting the scope of the invention. It should be noted that, for those of ordinary skills in the art, without departing from the concept of this application, several modifications and improvements can be made, all of which are within the scope of protection of this application. Therefore, the scope of protection of this application should be subject to the appended claims.

## Claims

1. An integrated seat for adults and children, **characterized in that** it comprises a body portion (2) and a child portion (1); wherein
a surface of the body portion (2) is provided with a fixing groove for accommodating the child portion (1);
the child portion (1) is embedded in the fixing groove; and
the child portion (1) comprises a child main body (101) and side wings (102) swingable forward arranged on two sides of the child main body (101) respectively.

2. The integrated seat for adults and children according to claim 1, **characterized in that** a folding assembly is arranged between the child main body (101) and each of the side wings (102), and the folding assembly is configured to drive an outer end of the side wing (102) to fold and swing forward or retract backward.

3. The integrated seat for adults and children according to claim 2, **characterized in that** the folding assembly comprises a second linear driving member (301), slide rail frames (302), swing frames (303), first links (304) and first side wing skeletons (305); and
the child main body (101) is provided with the second linear driving member (301) and the slide rail frames (302), a moving end of the second linear driving member (301) slides outward, the slide rail frame (302) is provided with an arc-shaped guide hole (306) bending forward, the swing frame (303) is slidably fitted with the arc-shaped guide hole (306), two ends of the first link (304) are respectively hinged to the moving end of the second linear driving member (301) and the swing frame (303), and the swing frame (303) is provided with the first side wing skeleton (305).

4. The integrated seat for adults and children according to claim 2, **characterized in that** the folding assembly comprises a scissor frame (307), push members (308), second side wing skeletons (312), second links (309) and a first driving screw (310);
the scissor frame (307) comprises two clamping rods (3071), and middle parts of the two clamping rods (3071) are hinged to the child main body (101) through a first rotating shaft (3072);
two sides of the scissor frame (307) are respectively provided with the push members (308), the push members (308) are longitudinally provided with elongated holes (311), and ends of the two clamping rods (3071) are respectively slidably fitted in the elongated holes (311) through sliding hooks;
outer sides of the push members (308) are respectively provided with the second side wing skeletons (312), a front and a rear of an inner end of the second side wing skeleton (312) are distributed with first hinge points (3121) and second hinge points (3122), the first hinge points (3121) are hinged with the child main body (101), and two ends of the second link (309) are respectively hinged to the second hinge point (3122) and the push member (308); and the first driving screw (310) is rotatably arranged at the child main body (101) transversely, the first driving screw (310) is driven by a first motor (313), and the first driving screw (310) is threadedly fitted with the push member (308).

5. The integrated seat for adults and children according to claim 2, **characterized in that**
the folding assembly comprises first driving gears (314), sliding members (315), third side wing skeletons (316) and a second driving screw (317);
the second driving screw (317) is rotatably fitted to the child main body (101) transversely, the second driving screw (317) is driven by a second motor (318), the second driving screw (317) is threadedly fitted with the sliding members (315), the sliding members (315) are slidably fitted transversely relative to the child main body (101), and the sliding member (315) is transversely distributed with a first rack (319); and
the third side wing skeleton (316) is provided with a second rotating shaft (320) rotatably fitted with the child main body (101), the second rotating shaft (320) is provided with the first driving gear (314), and the first driving gear (314) is meshed with the first rack (319).

6. The integrated seat for adults and children according to claim 2, **characterized in that**
the folding assembly comprises a second driving gear (323), sliding push members (324) and fourth side wing skeletons (325);
the second driving gear (323) is rotatably fitted to the child main body (101), the second driving gear (323) is driven by a third motor (326), two sides of the second driving gear (323) are respectively provided with the sliding push members (324) parallel with each other, the sliding push members (324) are slidably fitted transversely relative to the child main body (101), and the sliding push member (324) is provided with a second rack (327) meshed with the second driving gear (323); and
a front and a rear of an inner end of the fourth side wing skeleton (325) are distributed with third hinge points (328) and fourth hinge points (329), the third hinge points (328) are hinged with the child main body (101), the fourth hinge points (329) are provided as strip holes, and the sliding push member (324) is provided with a transverse rod (330) running through the strip holes.

7. The integrated seat for adults and children according to any of claims 1 to 6, **characterized in that** the body portion (2) and the child main body (101) are connected through a lifting assembly and/or a rotating assembly and/or a tilting assembly;
the lifting assembly is configured to adjust a height of the child main body (101) relative to the body portion (2);
the rotating assembly is configured to adjust an angle of horizontal rotation of the child main body (101) relative to the body portion (2); and
the tilting assembly is configured to adjust an angle of tilting of the child main body (101) relative to the body portion (2).

8. The integrated seat for adults and children according to claim 7, **characterized in that**
the lifting assembly comprises a lower pedestal (401), a lifting base (402), a driving link (403) and a driven link (404);
the lower pedestal (401) is fixed with the body portion (2), the lifting base (402) is connected with the child portion (1), the lifting base (402) is located above the lower pedestal (401), and the lifting base (402), and the driving link (403), the driven link (404) and the lower pedestal (401) below form a closed four-bar linkage; and
an upper end of the driving link (403) is provided with an arc-shaped toothed disc (405), the arc-shaped toothed disc (405) is centred at a hinged point at the upper end of the driving link (403), the lifting base (402) is provided with a third driving gear (406) meshed with the arc-shaped toothed disc (405), and the third driving gear (406) is driven by a fourth motor (407).

9. The integrated seat for adults and children according to claim 8, **characterized in that** at least one hinged point of the four-bar linkage is provided with a torsion spring (408), and the torsion spring (408) drives the lifting base (402) to go up.

10. The integrated seat for adults and children according to claim 7, **characterized in that**
the lifting assembly comprises a lower pedestal (401) and a lifting base (402); and
the lower pedestal (401) is fixed with the body portion (2), the lifting base (402) is connected with the child portion (1), the lifting base (402) is located above the lower pedestal (401), the lifting base (402) is slidably fitted vertically relative to the lower pedestal (401), the lifting base (402) is vertically provided with a third rack (409), the lower pedestal (401) is rotatably fitted with a fourth driving gear (410) meshed with the third rack (409), and the fourth driving gear (410) is driven by a fifth motor (411).

11. The integrated seat for adults and children according to claim 7, **characterized in that**
the lifting assembly comprises a lower pedestal (401), a lifting base (402) and a third linear driving member (414);
the lower pedestal (401) is fixed with the body portion (2), the lifting base (402) is connected with the child portion (1), and the lifting base (402) is located above the lower pedestal (401); and
two sides of the lower pedestal (401) are respectively provided with a plurality of sets of elongated inclined holes (412), two sides of the lifting base (402) are respectively provided with guide pins (413) slidably fitted with the elongated inclined holes (412), and two ends of the third linear driving member (414) are respectively hinged with the body portion (2) and the lifting base (402).

12. The integrated seat for adults and children according to claim 7, **characterized in that** the rotating assembly comprises a rotary toothed disc (501) and a first driving worm (502), the rotary toothed disc (501) is rotatably arranged horizontally relative to the body portion (2), the first driving worm (502) is rotatably fitted to the body portion (2) transversely, the rotary toothed disc (501) is meshed with the first driving worm (502), the rotary toothed disc (501) is connected with the child main body (101), and the first driving worm (502) is driven by a sixth motor (503).

13. The integrated seat for adults and children according to claim 7, **characterized in that** the rotating assembly comprises a driving gear (504) and a driven toothed disc (505), the driving gear (504) and the driven toothed disc (505) are respectively rotatably arranged horizontally relative to the body portion (2), the driving gear (504) and the driven toothed disc (505) are meshed and connected through a toothed belt (506), the driven toothed disc (505) is connected with the child main body (101), and the driving gear (504) is driven by an eighth motor.

14. The integrated seat for adults and children according to claim 7, **characterized in that** the tilting assembly comprises an upper pedestal (601) and a tilting base (602);
the upper pedestal (601) is connected with the body portion (2), and the tilting base (602) is connected with the child portion (1); and two upper ends of the upper pedestal (601) are respectively provided with elongated guide holes (603) with upward inclined outer ends, the tilting base (602) is slidably fitted with the elongated guide holes (603), two ends of the fourth linear driving member (604) are respectively hinged to the upper pedestal (601) and the tilting base (602), and the fourth linear driving member (604) pushes the tilting base (602) to slide in the elongated guide holes (603).

15. The integrated seat for adults and children according to claim 7, **characterized in that** the child main body (101) comprises a child seat cushion (1011) and a child backrest (1012) connected with each other; the body portion (2) comprises an adult seat cushion (201) and an adult backrest (202);
the child seat cushion (1011) and the adult seat cushion (201) are connected through the lifting assembly and/or the rotating assembly and/or the tilting assembly;
each side wing (102) comprises a seat cushion side wing (1021) and a head and back side wing (1022);
the seat cushion side wings (1021) are located at two sides of the child seat cushion (1011), and the head and back side wings (1022) are located at two sides of the child backrest (1012);
the child backrest (1012) comprises a waist and back section (10121) and a head section (10122), and each head and back side wing (1022) comprises a waist and back side wing (10221) and a head side wing (10222); and
two sides of the waist and back section (10121) are provided with the waist and back side wings (10221), two sides of the head section (10122) are provided with the head side wings (10222), the waist and back section (10121) and the head section (10122) are connected with a first linear driving member through a guide member (701), and the first linear driving member drives the head section (10122) to slide along the guide member (701).

16. The integrated seat for adults and children according to claim 15, **characterized in that** the guide member (701) is a sliding rod fixed to the head section (10122), the sliding rod is slidably fitted with the waist and back section (10121), the first linear driving member comprises a fourth driving screw (702), the fourth driving screw (702) is driven by a seventh motor (703), one end of the fourth driving screw (702) is rotatably fitted with the waist and back section (10121), and the other end of the fourth driving screw (702) is threadedly fitted with the head section (10122).

17. The integrated seat for adults and children according to claim 15, **characterized in that** a plurality of first locking assemblies are arranged between the child backrest (1012) and the adult backrest (202), each first locking assembly comprises a lock hook (801) and a lock rod (802), a shank of the lock hook (801) is hinged to the adult backrest (202), the lock rod (802) is arranged at the child backrest (1012) corresponding to a swing range of the lock hook (801), and the lock hook (801) is driven by a ninth motor (807) to swing to catch or leave the lock rod (802).

18. The integrated seat for adults and children according to claim 15, **characterized in that** a second locking assembly is arranged between the child backrest (1012) and the adult backrest (202), the second locking assembly comprises a second locking motor (901), a fifth driving screw (902), movable blocks (903), bolts (904) and sockets (905), the fifth driving screw (902) is rotatably fitted to the child backrest (1012) transversely, two ends of the fifth driving screw (902) are threaded in opposite directions, the fifth driving screw (902) is driven to rotate by the second locking motor (901), the two ends of the fifth driving screw (902) are respectively threadedly fitted with the movable blocks (903), the movable blocks (903) are slidably fitted transversely relative to the child backrest (1012), an inner side of each movable block (903) is provided with the bolt (904), and ends of the adult backrest (202) corresponding to the bolts (904) are provided with the sockets (905).
